# EUROPÄISCHE PATENTANMELDUNG

(11) **EP 0 869 598 A1**
(43) Veröffentlichungstag der Anmeldung: **07.10.1998**
(21) Anmeldenummer: 97810119.4
(22) Anmeldetag: 03.03.1997
(51) Int. Cl.: H02H 5/04, H02J 13/00

(54) **Verfahren zur Ausnutzung der thermischen Belastungsgrenze von Hochspannungsfreileitungen und Hochspannungskabeln**

(71) Anmelder: Köppl, Georg, 5242 Birr (CH)
(72) Erfinder: Köppl, Georg, 5242 Birr (CH)

(57) **Zusammenfassung**

Bei einer Hochspannungsfreileitung (1) oder einem Hochspannungskabel wird die thermische Belastungskapazität dadurch voll ausgenützt, dass eine Temperaturmessung an einer temperaturkritischen Stelle der Hochspannungsfreileitung / des Hochspannungskabels z.B. mittels eines Strahlungsthermometers oder einer FSI-Kamera (3) vorgenommen wird. Der Messwert wird einem Steuergerät (5) zugeführt, das entsprechende Mitteilungen (6, 7) an einen Netzoperator gibt und bei Überschreitung einer maximal zulässigen Grenztemperatur eine Öffnung des Schalters (8) der entsprechenden Leitung auslöst. Bei einem Hochspannungskabel wird die Temperaturmessung vorzugsweise an einem thermischen Abbild vorgenommen. Bei einer Hochspannungsfreileitung kann die Temperaturmessung über die Messung des Durchhangs erfolgen.

## Beschreibung

Die Erfindung betrifft ein Verfahren gemäss dem Oberbegriff des Patentanspruchs 1 oder 2, das es ermöglicht, die thermische Belastungskapazität von Hochspannungsfreileitungen und Hochspannungskabeln voll auszunützen.

Nach gängiger Praxis werden Hochspannungsfreileitungen und Hochspannungskabeln bei Überschreiten eines gewissen stationären Belastungsstroms abgeschaltet. Dieser Belastungsstrom bemisst sich nach einer durch Konstruktion und Material gegebenen maximal zulässigen Endtemperatur des Stromleiters. Die Endtemperatur ist in erster Linie abhängig vom Belastungsstrom, aber ebenfalls stark abhängig von der Umgebungstemperatur, von Wind, Regen, Schnee und Sonneneinstrahlung. Da die Auswirkung dieser meteorologischen Parameter schwer erfassbar ist, geht man bei der Festlegung des Grenzbelastungsstroms von konservativen Rahmenbedingungen aus, d.h. es wird eine relativ hohe Sommerumgebungstemperatur angenommen, bzw. bei Winterbetrieb auf eine ebenfalls relativ hoch angesetzte Winterumgebungstemperatur abgestellt.

Die übrigen Parameter werden nicht berücksichtigt. Damit geht wertvolle Reserve in der Belastungskapazität verloren. Ebenfalls unberücksichtigt bleibt die Vorbelastung des Stromleiters, womit auch eine mögliche, zeitlich begrenzte Überlastung des Stromleiters nicht ausgenutzt wird.

Der Erfindung liegt die Aufgabe zugrunde, die thermische Belastungsgrenze von Hochspannungsfreileitungen und Hochspannungskabeln voll auszunutzen. Erfindungsgemäss wird dies gemäss der Kennzeichnung des Patentanspruchs 1 oder 2 erreicht. In einer bevorzugten Ausführungsform ist vorgesehen, dass die Temperatur der Hochspannungsfreileitung bzw. des Hochspannungskabels an einer oder mehreren kritischen Stellen im Zuge der Leitung gemessen werden kann. Dieser Messwert wird in vorteilhafter Weise über eine Datenleitung kontinuierlich oder intervallweise einem Steuergerät zugeführt, das entsprechende Mitteilungen/Warnungen an den Netzoperator gibt, bzw. bei Überschreitung der zulässigen Grenztemperatur eine Schutzabschaltung des entsprechenden Leitungsstranges einleitet.

Die Temperaturmessung einer Freileitung kann berührungslos und über grössere Distanzen mit Hilfe eines Strahlungsthermometers oder einer FSI-Kamera (siehe z.B. W. Moor, Ch. Florin: Thermographische Inspektion von Hochspannungsanlagen, Bulletin SEV/VSE 7/1994 S. 39 ÷ 42) durchgeführt werden. Diese Messgeräte sind z.B. fest an einem Freileitungsmast montiert und über eine Signalleitung mit dem Steuergerät bzw. dem Schutzsystem verbunden.

Der Durchhang des Freileitungsseiles ist die eigentliche Bestimmungsgrösse für die thermische Belastbarkeit. Er ist neben den (festen) Materialeigenschaften, der Masse des Seiles und der Zugkraft nur von der Temperatur und der eventuellen Zusatzlast durch Rauhreif abhängig. Die berührungslose Messung des Durchhangs an der kritischen Stelle der Leitung ist deshalb als Äquivalent für die Temperaturmessung zu betrachten.

Bei Kabeln lässt sich eine unmittelbare Temperaturmessung nicht durchführen. Hier wird die Messung an einem thermischen Abbild vorgenommen, d.h. ein Kabelstück, das den ungünstigsten thermischen Bedingungen im Zuge einer Kabelleitung entspricht (kleinster Querschnitt und kleinster Leitwert des Kabelleiters, ungünstigste Verlegung, geringster Wärmeleitwert des Bodens), wird bei gleichen Einbaubedingungen über eine regelbare Stromquelle mit dem gleichen Strom beschickt, wie das Originalkabel, jedoch auf Niederspannungspotential. Damit kann eine direkte Temperaturmessung vorgenommen werden. Das thermische Abbild kann in der Nähe des Steuergeräts aufgebaut sein, womit lange Signalkabel entfallen.

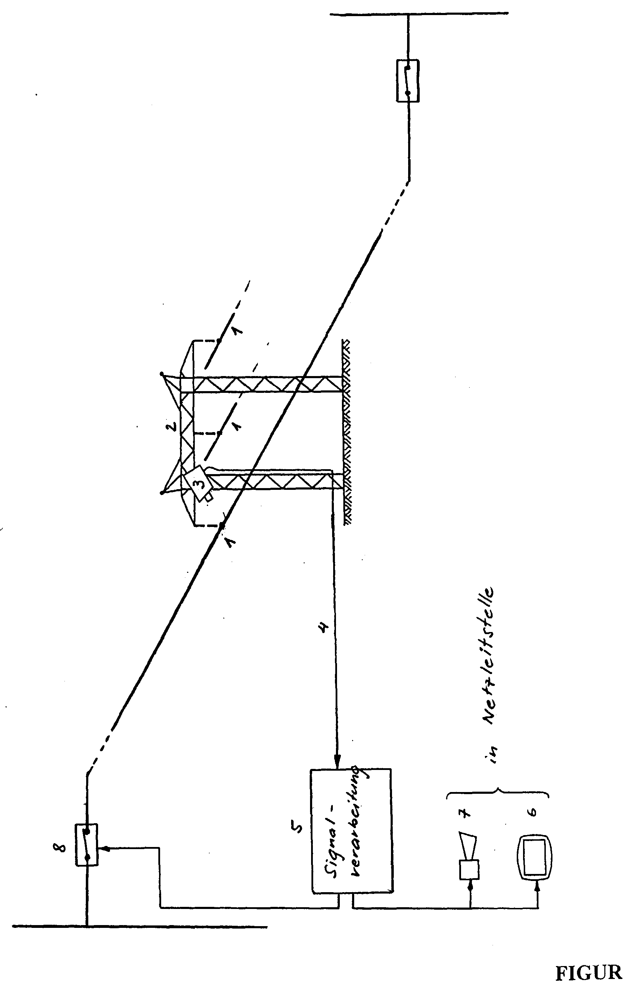

Im folgenden wird anhand der beiliegenden Zeichnung ein Ausführungsbeispiel der Erfindung beschrieben. Die einzige Figur zeigt einen Abschnitt einer Freileitung mit Leiterseilen 1. Auf dem Mast 2 ist ein Strahlungsthermometer 3 installiert und fest auf ein Leiterseil 1 eingestellt. Die Speisung des Strahlungsthermometers erfolgt über ein Niederspannungskabel oder über eine Solarzelle. Das Messignal wird über ein Signalkabel 4 an das Steuergerät 5 geleitet. Dort erfolgt eine kontinuierliche oder periodische Auswertung. Nähert sich die Leitertemperatur der maximalen Grenztemperatur, so erfolgt eine Warnung z.B. über Bildschirm 6 und eine Hupe 7 an das Betriebspersonal evtl. mit Angabe des noch zur Verfügung stehenden Zeitraums bis zum Erreichen der maximalen Grenztemperatur. Wird die maximale Grenztemperatur überschritten, so gibt das Steuergerät einen Abschaltbefehl an den entsprechenden Leistungsschalter 8 dieser Leitung.

Durch dieses Verfahren kann die Leitung bis zu ihrer thermischen Grenze voll ausgenutzt werden. Insbesondere werden bei diesem Verfahren die aktuell herrschenden Temperatur- und Wetterverhältnisse berücksichtigt, z.B. die stark temperatursenkende Wirkung von Wind und Regen/Schnee.

Dieses Verfahren erlaubt auch die Auswertung von Temperaturänderungen pro Zeiteinheit und damit Prognosen über die Zeit bis zum Erreichen der Grenztemperatur.

## Patentansprüche

1. Verfahren zur Ausnutzung der thermischen Belastungsgrenze von Hochspannungsfreileitungen und Hochspannungskabeln,
dadurch gekennzeichnet, dass eine Temperaturmessung der Hochspannungsfreileitung / des Hochspannungskabels an einer temperaturkritischen Stelle vorgenommen wird und der Messwert kontinuierlich oder intervallweise einem Steuergerät zugeführt wird, das entsprechende Mitteilungen/Warnungen an einen Netzoperator gibt und bei Überschreitung einer maximal zulässigen Grenztemperatur eine Schutzabschaltung der entsprechenden Leitung auslöst.

2. Verfahren zur Ausnutzung der thermischen Belastungsgrenze von Hochspannungsfreileitungen,
dadurch gekennzeichnet, dass der Durchhang einer Leitung an mindestens einer kritischen Stelle berührungslos gemessen wird und die Messwerte kontinuierlich oder intervallweise einem Steuergerät zugeführt werden und bei Annäherung an bzw. Überschreitung eines maximal zulässigen Grenzwertes Meldungen an einen Netzoperator bzw. Schutzauslösungen zur Abschaltung der entsprechenden Leitung erfolgen.

3. Verfahren nach Patentanspruch 1 für eine Hochspannungsfreileitung,
dadurch gekennzeichnet, dass die Temperaturmessung über ein thermisches Abbild erfolgt.

4. Verfahren nach Patentanspruch 1 oder 2,
dadurch gekennzeichnet, dass die Messung an mehr als einer Stelle im Zuge der Leitung erfolgt, wodurch die Plausibilität der Messresultate erhöht wird.

5. Verfahren nach einem der Patentansprüche 1, 2 oder 4,
dadurch gekennzeichnet, dass die Messung an 2 oder 3 Phasen durchgeführt wird, entweder an der gleichen Stelle oder an verschiedenen Stellen.

6. Verfahren nach Patentanspruch 1 für eine Hochspannungsfreileitung,
dadurch gekennzeichnet, dass die Temperaturmessung über eine auf dem Leiterseil befindliche Sonde erfolgt und die Messwerte über einen Sender an das Steuergerät übertragen werden.
